# EUROPÄISCHE PATENTSCHRIFT

(11) **EP 2 735 429 B1**
(45) Veröffentlichungstag und Bekanntmachung des Hinweises auf die Patenterteilung: **10.02.2016**
(21) Anmeldenummer: 13194239.3
(22) Anmeldetag: 25.11.2013
(51) Int. Cl.: B29C 49/06, B29C 49/12

(54) **Behältnisbehandlungseinrichtung mit Reckeinrichtung**
Container treatment device with stretching device
Dispositif de traitement de récipient doté d'un dispositif d'étirage

(30) Priorität: 23.11.2012 DE 102012111363
(43) Veröffentlichungstag der Anmeldung: 28.05.2014
(73) Patentinhaber: Krones AG, 93073 Neutraubling (DE)
(72) Erfinder: Voth, Klaus, 93073 Neutraubling (DE)
(74) Vertreter: Bittner, Bernhard

(56) Entgegenhaltungen:
- EP-A1- 2 186 619
- EP-A2- 2 383 100
- EP-A2- 2 460 638
- FR-A1- 2 863 929
- US-A1- 2010 159 056

## Beschreibung

Die vorliegende Erfindung bezieht sich auf eine Behältnisbehandlungseinrichtung zum Expandieren von Vorformlingen zu Behältnissen, aufweisend zumindest eine Blaseinrichtung zum Einbringen eines unter Druck befindlichen fließfähigen Mediums in einen Innenraum des Vorformlings, und zumindest eine Reckeinrichtung zum Strecken des Vorformlings während eines Expansionsvorganges.

Bei der erfindungsgemäßen Behältnisbehandlungseinrichtung, welche neben einer Blaseinrichtung auch eine Reckeinrichtung aufweist, handelt es sich demzufolge um vorzugsweise eine Streck-/Blaseinrichtung zum Streckblasen bzw. Expandieren eines Vorformlings und insbesondere eines Kunststoffvorformlings zu einem Behältnis und insbesondere einem Kunststoffbehältnis, wie beispielsweise einer Getränkeflasche.

Eine Streck-/Blaseinrichtung mit einer Reckeinrichtung und einer Blaseinrichtung ist beispielsweise aus der WO2008098565 bekannt, wobei diese Streck-/Blaseinrichtung eine Vielzahl von Bauteilen bzw. Elementen, wie beispielsweise u.a. eine Gewindestange und einen damit über ein Kopplungselement verbundenen Reckstangenträger zum Bewegen der Reckstange in einen zu expandierenden Vorformling hinein bzw. aus einem expandierten Behältnis hinaus, oder einer zwischen einer Motorwelle eines Motors und der Gewindestange angeordneten Kupplung aufweist, um nicht nur einen Blasprozess, sondern zudem auch einen Streckprozess zum Expandieren eines Vorformlings zu gewährleisten. Deutlich zeigt sich bei der Streck-/Blaseinrichtung der WO2008098565, dass eine eigenständige bzw. zusätzliche Linearführung der Reckstange immer erforderlich ist, wobei des Weiteren Abdeckelemente eingebracht werden müssen, um eine Verschmutzung der Reckstange beispielsweise durch die Gewindestange zu vermeiden. Auch verhindert der komplexe Aufbau der Streck-/Blaseinrichtung der WO2008098565, dass die Reckstange einfach und schnell und damit kostengünstig - im Bedarfsfall - ausgetauscht werden könnte. Vielmehr ist die Reckstange derart zwischen einzelnen Einrichtungen, wie beispielsweise dem Pneumatikventil bzw. dem Reckstangenträger und dem Pneumatikblock angeordnet, dass es einer zeitaufwendigen Demontage einer Vielzahl von Bauelementen bedarf, um einen Austausch der Reckstange zu ermöglichen.

Eine vergleichbare komplexe Konstruktion einer Streck-/Blaseinrichtung zeigt beispielsweise auch die EP 0 577 384 A1, welche eine Anordnung einer Reckstange über einen linear geführten Träger offenbart, wobei dieser Träger wiederum derart mit einer mit einer Motorwelle gekoppelten Gewindestange in Wirkverbindung steht, dass durch die Drehbewegung der Gewindestange der Träger translatorisch auf und ab bewegt wird. Auch hier bedarf es wieder einer zusätzlichen Linearführung der Reckstange, nämlich dem mit der Gewindestange wechselwirkenden Träger, wodurch auch die Streck-/Blaseinrichtung der EP 0 577 384 A1 nicht nur kosten- und wartungsintensiv ist, sondern auch einen schnellen und einfachen Wechsel der Reckstange nicht ermöglicht.

Weitere bekannte Vorrichtungen sind in den Druckschriften EP2186619A1, FR2863929A1 und EP383100A2 beschrieben.

Demnach ist es die Aufgabe der vorliegenden Erfindung eine Behältnisbehandlungseinrichtung und insbesondere eine Streck-/Blaseinrichtung zum Expandieren von Vorformlingen zu Behältnissen zur Verfügung zu stellen, welche insbesondere in Hinblick auf die oben genannten Einrichtungen einen konstruktiv einfach gestalteten Aufbau mit einer geringen Anzahl von Bauelementen aufweist, um Herstellkosten, Montagekosten sowie Wartungskosten der Einrichtung zu reduzieren, und wobei die Einrichtung selbst so gestaltet sein soll, dass ein einfacher Austausch der Reckstange ermöglicht wird, wobei insbesondere das Auftreten von die Reckstange verschmutzenden Bauteilen reduziert werden soll, um auf die Reckstange und damit das zu expandierende Behältnis einbringbare Verschmutzungen, wie Öle, Fette usw. zu vermeiden.

Diese Aufgabe löst die vorliegende Erfindung mittels einer Behältnisbehandlungseinrichtung gemäß dem Anspruch 1 Vorteilhafte Ausführungsformen und Weiterbildungen sind Gegenstand der Unteransprüche.

Die erfindungsgemäße Behältnisbehandlungseinrichtung zum Expandieren von Vorformlingen zu Behältnissen weist zumindest eine Blaseinrichtung zum Einbringen eines unter Druck befindlichen fließfähigen Mediums in einen Innenraum des Vorformlings, und zumindest eine Reckeinrichtung zum Strecken des Vorformlings während eines Expansionsvorganges auf.

Des Weiteren weist die Blaseinrichtung der erfindungsgemäßen Behältnisbehandlungseinrichtung zumindest einen Blasdüsenkolben bzw. eine Blasdüseneinrichtung und die Reckeinrichtung zumindest eine sich zumindest abschnittsweise und zumindest zeitweise translatorisch durch eine Durchgangsöffnung des Blasdüsenkolbens bewegbare Reckstange auf, welche in Wirkverbindung mit zumindest einem Abschnitt einer Reckstangenantriebseinrichtung steht, wobei zumindest ein Reckstangenlagerelement (lediglich) im Bereich der Durchgangsöffnung angeordnet ist, um die Reckstange zu führen.

Bevorzugt dient die Blasdüseneinrichtung auch zum Führen der Reckstange bzw. deren Bewegung und besonders bevorzugt ist neben dieser Führungseinrichtung keine weitere Führungseinrichtung zum Führen der Reckstange vorgesehen. Mit anderen Worten ist die Blasdüseneineinrichtung die einzige Einrichtung, welche zum Führen der Bewegung der Reckstange dient.

Demzufolge ist die Reckstange vorzugsweise unmittelbar mit einem Abschnitt bzw. Bereich der Reckstangenantriebseinrichtung verbunden, beispielsweise über eine formschlüssige Verbindung, wie einem Bajonettverschluss oder einem Gewindeverschluss, oder auch kraftschlüssig, in Form einer Presspassung.

+Gemäß einer bevorzugten Ausführungsform ist die Reckstangenantriebseinrichtung ein elektrisch antreibbarer Motor, insbesondere ein Linearmotor und insbesondere tubularer Linearmotor, welcher bevorzugt neben einem Läufer auch einen vorzugsweise den Läufer umgebenen und vorteilhaft feststehenden Stator aufweist. Auch dieser Motor trägt dazu bei, dass die Führungsbelastungen gering gehalten werden können. So wäre es möglich, dass insgesamt die Führung der Bewegung der Kombination aus der Reckstande und dem Läufer des Linearmotors nur einerseits durch den tubularen bzw. röhrenförmigen Stator und andererseits durch die Blasdüseneinrichtung übernommen wird

Die aus dem allgemeinen Stand der Technik bekannten tubularen Linearmotoren, welche auch in der erfindungsgemäßen Behältnisbehandlungseinrichtung eingesetzt werden können, weisen Magnete wie beispielsweiset Neodymmagnete auf, die sich in einem vorzugsweise nichtmagnetischen Stahlrohr befinden. Die einzelnen Magnete, welche in Form von Scheiben- oder Ringmagneten ausgestaltet sein können, werden bevorzugt gegenpolig in dieses (Präzisions-)Stahlrohr eingefügt, so dass auf der Außenseite des Stahlrohres eine Nord-Süd-Nord-Süd Feldanordnung entsteht. Der Stator weist bevorzugt ein Eisenrohr auf, das als Rückschluss für den magnetischen Fluss dient. Innerhalb dieses Eisenrohres befinden sich die Wicklungen, welche vorzugsweise als Zwei- oder Dreiphasenwicklungen ausgeführt werden und auf einen Wicklungsträger aufgebracht sind, welcher zugleich die Funktion eines Gleitlagers besitzt.

Der sich - bevorzugt innerhalb des Stators - translatorisch bewegende Läufer, der sich zumindest innerhalb definierter Bewegungsgrenzen durch eine entsprechende Statorbohrung des Stators hindurch bewegt, weist vornehmlich einen Kopplungsbereich auf, welcher insbesondere einem Stirnende des Läufers entspricht, mittels welchem eine Verbindung zwischen dem Läufer und der Reckstange ermöglicht wird. Der vornehmlich stabförmige Läufer weist vorzugsweise einen kreisförmigen Querschnitt auf, wobei der Querschnitt jedoch auch oval, drei-, vier- oder vieleckig sein kann. Die Bewegung des Läufers wird bevorzugt im Stator geführt.

So ist es auch denkbar, dass die Reckstange einen kreisförmigen Querschnitt aufweisen kann, wobei der Querschnitt der Reckstange vorzugsweise entsprechend der Form des Querschnittes des Läufers ausgebildet ist, um vorteilhaft eine unmittelbare Anordnung des Läufers an der Reckstange zu ermöglichen.

In einer Ausführungsform, in welcher der (Stab-)Durchmesser des Läufers größer dimensioniert ist, als der Durchmesser der Reckstange, wäre es folglich möglich, dass der Läufer zumindest abschnittsweise an dessen Ende, welches mit der Reckstange verbunden wird (Verbindungsende), ein Innengewinde aufweist, in welches die Reckstange, welche zumindest abschnittsweise an dessen Ende, welches mit dem Läufer verbunden ist (Verbindungsende), ein Außengewinde aufweist, eingreift. Auch wäre ein Presspassung möglich, so dass das Verbindungsende der Reckstange in eine Ausnehmung im Verbindungsende des Läufers eingepresst wird. Auch Klebe-, Schweiß-, Steckverbindungen usw. sind denkbar. Vorzugsweise werden jedoch derartige Verbindungsarten gewählt, welche wieder zerstörungsfrei gelöst werden können, um insbesondere einen einfachen und schnellen Austausch der Reckstang zu ermöglichen.

Durch eine im Wesentlichen translatorische Bewegung des Läufers entlang einer Längsachse des Läufers - beispielsweise in Richtung des zu expandierenden Vorformlings oder anders herum - wird vorzugsweise ebenso die Reckstange entlang einer Längsachse in Richtung des zu expandierenden Vorformlings und in einen Innenbereich des Vorformlings hinein bewegt oder heraus bewegt.

Demzufolge dient vorzugsweise lediglich eine Durchgangsöffnung des Blasdüsenkolbens, welcher insbesondere ebenfalls translatorisch in Richtung des zu expandierenden Behältnisses - oder entgegengesetzt dazu - bewegt werden kann, als Linearführung der Reckstange.

Vornehmlich um Reibungen bei der Bewegung der Reckstange durch die Durchgangsöffnung des Blasdüsenkolbens zu reduzieren und/oder eine definierte Führung bzw. Bewegung der Reckstange zu gewährleisten, ist bevorzugt zumindest ein Reckstangenlagerelement bzw. Reckstangenführungselement innerhalb der Durchgangsöffnung angeordnet, welches beispielsweise eine Linearführung, wie eine Gleitführung oder eine Wälzführung ist. Vorzugsweise weist die Durchgangsöffnung eine Reckstangenführungsbuchse auf, wobei in diesem Fall der durch Gleitreibung verursachte Widerstand durch die Auswahl einer reibungsarmen Materialpaarung reduziert wird.

Vorzugsweise weist die Reckstange eine sich in Längsrichtung durch die Reckstange hindurch erstreckende Bohrung auf, durch welche beispielsweise ein fließfähiges Medium, wie beispielsweise Luft zum Expandieren des Vorformlings zu einem Behältnis, oder auch ein Sterilisationsmedium, wie ein Sterilisationsgas, oder ein Kühlmedium etc. hindurch strömen bzw. fließen kann.

In einer weiteren bevorzugten Ausführungsform weist die erfindungsgemäße Behältnisbehandlungseinrichtung eine Kupplungseinrichtung auf, welche besonders bevorzugt zwischen der Reckstange und der Reckstangenantriebseinrichtung und insbesondere zwischen der Reckstange und dem Läufer der Reckstangenantriebseinrichtung bzw. dem Läufer des Linearmotors bzw. Motors angeordnet ist. Es ist jedoch auch möglich, die Behältnisbehandlungseinrichtung ohne diese Kupplungseinrichtung auszuführen.

Demzufolge findet gemäß einer bevorzugten Ausführungsform eine Verbindung zwischen dem Läufer und der Reckstange insbesondere mittelbar über die Kupplungseinrichtung statt. Vorzugsweise weist die Kupplungseinrichtung zumindest ein Läuferkupplungselement und ein Reckstangenkupplungselement auf, wobei das Läuferkupplungselement zumindest eine erste Läuferkupplungselementkraftaufnahmeseite und zumindest eine erste Läuferkupplungselementkraftabgabeseite und das Reckstangenkupplungselement zumindest eine erste Reckstangenkupplungselementkraftaufnahmeseite und zumindest eine erste Reckstangenkupplungselementkraftabgabeseite aufweist.

Dabei erstreckt sich die erste Läuferkupplungselementkraftaufnahmeseite bzw. die erste Reckstangenkupplungselementkraftaufnahmeseite in einer Ebene, welche sich im Wesentlichen parallel zu einer Ebene erstreckt, in welcher sich die erste Läuferkupplungselementkraftabgabeseite bzw. die erste Reckstangenkupplungselementkraftabgabeseite erstreckt. Beide Seiten, nämlich die erste Läuferkupplungselementkraftaufnahmeseite und die erste Läuferkupplungselementkraftabgabeseite bzw. die erste Reckstangenkupplungselementkraftaufnahmeseite und die erste Reckstangenkupplungselementkraftabgabeseite erstrecken sich dabei entlang von Ebenen, die im Wesentlichen kongruent zueinander und auch im Wesentlichen gleichmäßig beabstandet zueinander verlaufen. Dadurch wird eine störungsfreie Kraftübertragung von dem Läufer an die Reckstange ermöglicht.

Als eine Kraftaufnahmeseite eines Kupplungselementes wird dabei die Seite definiert, auf welcher zuerst beispielsweise eine Druckkraft, insbesondere während des Expansionsvorganges, d.h., wenn die Reckstange in Richtung des zu expandierenden Behältnisses und insbesondere in dieses hinein bewegt wird, bzw. zuerst eine Zugkraft, insbesondere nach dem Expansionsvorgang, d.h. während dem Entspannungsvorgang, wenn die Reckstange aus dem expandierten Behältnis von diesem weg in Richtung einer Ausgangsposition bewegt wird, einwirkt.

Demnach weist jedes Kupplungselement der Kupplungseinrichtung jeweils vornehmlich zumindest eine Kraftaufnahmeseite und eine Kraftabgabeseite auf.

Vorzugsweise sind der Läufer an der ersten Läuferkupplungselementkraftaufnahmeseite und die Reckstange an der ersten Reckstangenkupplungselementkraftabgabeseite angeordnet.

D.h., dass während des Expansionsvorganges eine Druckkraft aufgrund einer translatorischen Bewegung des Läufers in Richtung des zu expandierenden Behältnisses auf die zumindest eine erste Läuferkupplungselementkraftaufnahmeseite des Läuferkupplungselementes aufgebracht wird, wobei von da aus die Kraft durch das Läuferkupplungselement in Richtung der ersten Läuferkupplungselementkraftabgabeseite strömt, und von der ersten Läuferkupplungselementkraftabgabeseite an die erste Reckstangenkupplungselementkraftaufnahmeseite übertragen wird. Von der ersten Reckstangenkupplungselementkraftaufnahmeseite strömt die Druckkraft weiter in Richtung der ersten Reckstangenkupplungselementkraftabgabeseite und von dort zu der Reckstange, welche vornehmlich direkt mit der ersten Reckstangenkupplungselementkraftabgabeseite des Reckstangenkupplungselementes verbunden ist. Dadurch wird die Reckstange aufgrund der vom Läufer übertragenen Druckkraft in das zu expandierende Behältnis hinein bewegt.

Entsprechendes gilt vornehmlich für den Fall der auf den Läufer wirkenden Zugkraft, beispielsweise während eines Entspannungsvorganges, bei welchem die Reckstange nach dem Expansionsvorgang wieder aus dem expandierten Behältnis hinausbewegt wird. Hierbei wird eine Zugkraft vorzugsweise über den Läufer auf die erste Läuferkupplungselementkraftaufnahmeseite des Läuferkupplungselementes aufgebracht und von da aus durch das Läuferkupplungselement in Richtung der ersten Läuferkupplungselementkraftabgabeseite und darauffolgend an die erste Reckstangenkupplungselementkraftaufnahmeseite übertragen, von wo aus die Zugkraft in Richtung der ersten Reckstangenkupplungselementkraftabgabeseite strömt, um von der Reckstange aufgenommen zu werden, welche folglich dadurch zu einer translatorischen Bewegung hinaus aus dem expandierten Behältnis veranlasst wird. Hierbei ist es jedoch erforderlich, dass insbesondere zwischen der ersten Läuferkupplungselementkraftabgabeseite und der ersten Reckstangenkupplungselementkraftaufnahmeseite zumindest eine derartige (formschlüssige) Verbindung vorliegt, dass auch Zugkräfte ohne zusätzliche Halteelemente übertragen werden können. Dazu wäre es denkbar, dass die erste Läuferkupplungselementkraftabgabeseite oder die erste Reckstangenkupplungselementkraftaufnahmeseite Eingriffselemente aufweist, welche in die anliegende Seite, nämlich die erste Reckstangenkupplungselementkraftaufnahmeseite oder die erste Läuferkupplungselementkraftabgabeseite bzw. in entsprechende Ausformungen eingreifen.

Es ist zudem denkbar, dass zumindest ein Abschnitt und insbesondere ein Endabschnitt der Reckstange in einer Bohrung des Reckstangenkupplungselementes und/oder zumindest ein Abschnitt und insbesondere ein Endabschnitt des Läufer in einer Bohrung des Läuferkupplungselementes eingebracht ist, um eine starre bzw. feste Verbindung zwischen den entsprechenden Kupplungselementen und dem Läufer bzw. der Reckstange zu ermöglichen.

Die Verbindung zwischen den Kupplungselementen und dem Läufer bzw. der Reckstange kann dabei formschlüssig oder reibschlüssig erfolgen, wobei bei einer formschlüssigen Verbindung entsprechende Verbindungselemente, wie beispielsweise in Form eines Bajonettverschlusses vorliegen können.

Auch wäre es denkbar, dass die Bohrung innerhalb der Kupplungselemente Innengewinde aufweist, während der Läufer bzw. die Reckstange zumindest abschnittsweise Außengewinde aufweise, die in die entsprechenden Innengwinde eingreifen können.

Durch eine derartige Anordnung bzw. Verbindung der Reckstange bzw. des Läufers mit den entsprechenden Kupplungselementen wird vorteilhaft ein einfacher Austausch der einzelnen Bauteile gewährleistet.

In einer weiteren bevorzugten Ausführungsform ist das Läuferkupplungselement zumindest abschnittsweise in einer Ausnehmung des Reckstangenkupplungselementes angeordnet, wobei die Ausnehmung zumindest bereichsweise und insbesondere zumindest ein Bereich der Ausnehmung zumindest in sich senkrecht zur Bewegungsrichtung der Reckstange erstreckender Umfangsrichtung größer gestaltet ist, als ein sich in senkrecht zur Bewegungsrichtung der Reckstange erstreckender Umfang des Läuferkupplungselements, um zumindest eine begrenzte Bewegung des Läuferkupplungselements in der sich senkrecht zur Bewegungsrichtung der Reckstange erstreckenden Richtung zu ermöglichen (erste Ausführungsform der Kupplungseinrichtung).

Es wäre jedoch auch denkbar, dass das Reckstangenkupplungselement zumindest abschnittsweise in einer Ausnehmung des Läuferkupplungselementes angeordnet ist, wobei die Ausnehmung zumindest bereichsweise und insbesondere zumindest ein Bereich der Ausnehmung zumindest in sich senkrecht zur Bewegungsrichtung der Reckstange erstreckender Umfangsrichtung größer gestaltet ist, als ein sich in senkrecht zur Bewegungsrichtung der Reckstange erstreckender Umfang des Reckstangenkupplungselementes, um zumindest eine begrenzte Bewegung des Reckstangenkupplungselementes in der sich senkrecht zur Bewegungsrichtung der Reckstange erstreckenden Richtung zu ermöglichen (zweite Ausführungsform der Kupplungseinrichtung). Bevorzugt weist jedoch die Kupplungseinrichtung kein Spiel in der Längsrichtung bzw. der Bewegungsrichtung der Reckstange auf. Bevorzugt handelt es sich bei dieser Bewegungsrichtung auch um eine Längsrichtung der zu expandierenden Behältnisse

In beiden Ausführungsformen werden die Kupplungselemente derart gestaltet, dass diese zumindest teilweise ineinander eingreifen bzw. ineinander eingesetzt werden können.

Um insbesondere zwar eine Bewegung der Kupplungselemente zueinander in der benannten Umfangsrichtung - Richtung senkrecht zur Bewegungsrichtung der Reckstange - zu ermöglichen, jedoch gleichzeitig eine Bewegung der der Kupplungselemente zueinander in einer Richtung im Wesentlichen entlang bzw. parallel zur Bewegungsrichtung der Reckstange zu verhindern - ohne, dass eine Verbindung zwischen der ersten Läuferkupplungselementkraftabgabeseite und der ersten Reckstangenkupplungselementkraftaufnahmeseite erforderlich wird - , weist die Ausnehmung des entsprechenden Kupplungselementes, das heißt des Läuferkupplungselementes oder des Reckstangenkupplungselementes zwei zueinander unterschiedliche ausgestaltete Bereiche auf.

Demnach weist die Ausnehmung des einen Kupplungselementes einen zweiten Bereich auf, welcher insbesondere das andere bzw. zweite Kupplungselement aufnehmen kann, während der erste Bereich derart kleiner dimensioniert ist, dass lediglich zumindest ein Bereich des Läufers oder der Reckstange diesen durchdringen können, während das zweite in der Ausnehmung eingebrachte Kupplungselement durch diesen ersten Bereich der Ausnehmung nicht hindurchtreten kann. Demnach wird durch den ersten Bereich der Ausnehmung insbesondere eine Art Rückhalteelement bzw. Halteelement ausgebildet, welches sich vorzugsweise zumindest teilweise bzw. abschnittsweise entlang der ersten Läuferkupplungselementkraftaufnahmeseite (erste Ausführungsform) oder entlang der ersten Reckstangenkupplungselementkraftabgabeseite (zweite Ausführungsform) erstreckt. Mit Hilfe dieses Halteelementes wird hauptsächlich während eines Zurückführens der Reckstange aus dem expandierten Behältnis in Richtung der Ausgangsposition ein Verrutschen oder gar ein sich lösen der einzelnen Kupplungselemente - insbesondere in Richtung der Bewegungsrichtung der Reckstange - verhindert.

Des Weiteren wird durch dieses Halteelement zumindest eine zweite Kraftaufnahmeseite, nämlich eine zweite Reckstangenkupplungselementkraftaufnahmeseite (erste Ausführungsform) oder eine zweite Kraftabgabeseite, nämlich eine zweite Läuferkupplungselementkraftabgabeseite (zweite Ausführungsform) gebildet.

Die zweite Reckstangenkupplungselementkraftaufnahmeseite erstreckt sich dabei bevorzugt in einer Ebene parallel zu der ersten Läuferkupplungselementkraftaufnahmeseite und berührt diese zumindest abschnittsweise und zumindest zeitweise.

Die zweite Läuferkupplungselementkraftabgabeseite erstreckt sich dabei bevorzugt in einer Ebene parallel zu der ersten Reckstangenkupplungskraftabgabeseite und berührt diese zumindest abschnittsweise und zumindest zeitweise.

In beiden Ausführungsformen weist der erste Bereich der Ausnehmung vorzugsweise einen kleineren Umfang in senkrechter Richtung der Bewegungsrichtung der Reckstange auf, als der zweite Bereich der Ausnehmung, welcher im Wesentlichen das andere, zweite Kupplungselement aufnimmt, wobei beide Bereiche der Ausnehmung vorzugsweise eine gemeinsame zentrale Mittelachse aufweisen. Die gesamte Ausnehmung erstreckt sich somit ausgehend von einer Oberfläche des entsprechenden Kupplungselement in das Innere, wobei der erste Bereich der Ausnehmung sich von der Oberfläche des Kupplungselementes bis hin zum zweiten Bereich der Ausnehmung erstreckt, welcher im Wesentlichen im Inneren des Kupplungselementes eingebracht ist.

Demzufolge geht der erste Bereich der Ausnehmung in den zweiten Bereich der Ausnehmung über, wobei die gemeinsame zentrale Mittelachse bzw. Längsachse der Bereiche der Ausnehmung mit einer zentralen Längsachse des Läufers und/oder der Reckstange fluchtet, wobei sich die jeweiligen zentralen Längsachsen in Richtung der Bewegungsrichtung der Reckstange erstrecken.

Vorzugsweise kontaktiert - insbesondere bei der ersten und zweiten Ausführungsform der Kupplungseinrichtung - zumindest ein Bereich der ersten Läuferkupplungselementkraftabgabeseite zumindest abschnittsweise einen Bereich der ersten Reckstangenkupplungselementkraftaufnahmeseite, um zumindest während des Expansionsvorganges formschlüssig und/oder kraftschlüssig die vom Läufer auf das Kupplungselement aufgebrachte Kraft (Druckkraft) auf die Reckstange zu übertragen, wodurch die Reckstange veranlasst wird sich in Richtung des zu expandierenden Vorformlings bzw. Behältnisses zu bewegen.

Insbesondere vorliegend bei der ersten Ausführungsform der Kupplungseinrichtung - kontaktiert folglich vorzugsweise während des Entspannungsvorganges, d.h., nach dem Expansionsvorgang zumindest ein Bereich der ersten Läuferkupplungselementkraftaufnahmeseite zumindest abschnittsweise eine Seite des Bereiches des Reckstangenkupplungselementes - nämlich die zweite Reckstangenkupplungselementkraftaufnahmeseite -, welcher sich in Form eines Haltelementes - gebildet aufgrund der unterschiedlichen Dimensionierungen des ersten und zweiten Bereichs der Ausnehmung - an die erste Läuferkupplungselementkraftaufnahmeseite anlegt, um formschlüssig und/oder kraftschlüssig die vom Läufer auf das Kupplungselement aufgebrachte Kraft (Zugkraft) auf die Reckstange zu übertragen.

Dementsprechend kontaktiert insbesondere vorliegend bei der zweiten Ausführungsform der Kupplungseinrichtung vorzugsweise während des Entspannungsvorganges, d.h., nach dem Expansionsvorgang die Reckstangenkupplungselementkraftabgabeseite zumindest abschnittsweise eine Seite des Bereiches des Läuferkupplungselementes - nämlich die zweite Läuferkupplungselementkraftabgabeseite - , welche sich in Form eines Haltelementes - gebildet aufgrund der unterschiedlichen Dimensionierungen des ersten und zweiten Bereichs der Ausnehmung- an die erste Reckstangenkupplungselementkraftabgabeseite (welche hierbei eher als Kraftaufnahmeseite arbeitet) anlegt, um formschlüssig und/oder kraftschlüssig die vom Läufer auf das Kupplungselement aufgebrachte Kraft (Zugkraft) auf die Reckstange zu übertragen.

Es ist jedoch auch denkbar, dass die Kupplungseinrichtung insbesondere in Form einer Bajonettverbindung bzw. eines Bajonettverschlusses ausgestaltet ist, wobei dazu entweder das Läuferkupplungselement entsprechende Ausnehmungen bzw. Führungen bzw. Schlitze aufweist in welche Vorsprünge des anderen Kupplungselementes, wie dem Reckstangenkupplungselement eingreifen oder anders herum. In dieser Ausführungsform könnte auf Ausnehmungen der oben benannten Art verzichtet werden.

Durch eine entsprechende Ausgestaltung der Kupplungseinrichtung mittels zweier Kupplungselemente ist ein einfacher und schneller Austausch der Reckstange vorteilhaft möglich.

Wie bereits erwähnt, weist der Läufer vorzugsweise eine zentrale sich zumindest abschnittsweise in Bewegungsrichtung der Reckstange erstreckende Längsachse auf, welche bevorzugt zumindest abschnittsweise und zumindest zeitweise mit einer zentralen sich zumindest abschnittsweise in Bewegungsrichtung der Reckstange erstreckenden Längsachse der Reckstange fluchtet.

Dadurch wird u.a. vorteilhaft eine getriebelose Verbindung zwischen dem Läufer und der Reckstange ermöglicht.

In einer weiteren bevorzugten Ausführungsform weist die Behältnisbehandlungseinrichtung eine sich zumindest abschnittsweise in Richtung der Bewegungsrichtung der Reckstange erstreckende Haltevorrichtung auf, an welcher eine den Blasdüsenkolben führende und zumindest abschnittsweise umgebende Ventilblockeinrichtung und/oder eine die Reckstangenantriebseinrichtung zumindest teilweise umgebende Kühleinrichtung stationär angeordnet sind. Vorteilhaft ist der Stator des Antriebs der Reckstange in ein Kühlgehäuse montiert.

Demnach sind vorzugsweise lediglich die Ventilblockeinrichtung und/oder die Kühleinrichtung an der Haltevorrichtung gelagert. Eine Lagerung einer Linearführung für die Reckstange weist die Haltevorrichtung nicht auf, insbesondere, da die Reckstange selbst lediglich über innerhalb einer Durchgangsöffnung des Blasdüsenkolbens angeordnete Reckstangenlagereinrichtungen bzw. -elemente geführt bzw. gelagert wird.

Zur Positionierung und insbesondere zur Zentrierung der Ventilblockeinrichtung bzw. der Kühleinrichtung an der Halteeinrichtung ist es denkbar, dass die Halteeinrichtung zumindest eine sich vorzugsweise im Wesentlichen zumindest abschnittsweise in Richtung der Bewegungsrichtung der Reckstange erstreckende Nut aufweist, in welche entsprechende Ausnehmungen der Ventilblockeinrichtung oder auch des Stators des Motors selbst sowie der Kühleinrichtung eingreifen. Dadurch kann es u.a. ermöglicht werden, dass die entsprechenden Durchgangsöffnungen bzw. Bohrungen der einzelnen Elemente derart kongruent zueinander und zentriert gelagert sind, dass eine translatorische Bewegung des Läufers sowie der Reckstange selbst in Richtung der zu expandierenden Behältnisses störungsfrei ermöglicht wird.

Vorzugsweise ist der Stator innerhalb der Kühleinrichtung starr angeordnet, wobei die Kühleinrichtung insbesondere zur Kühlung des Motors während dessen Betrieb dient, um eine Überhitzung und damit einen Verschleiß oder gar Ausfall des Motors zu verhindern.

Führungs- bzw. Lagerungseinrichtungen des Läufers sind vornehmlich im Stator und insbesondere in der Statorbohrung angeordnet.

Bevorzugt weist die erfindungsgemäße Behältnisbehandlungseinrichtung eine Abdeckeinrichtung auf, welche vornehmlich zumindest abschnittsweise zwischen der Ventilblockeinrichtung und dem Stator angeordnet ist, um die dazwischenliegenden Bauteilabschnitte der Reckstange, des Läufers und/oder der Kupplungseinrichtung im Wesentlichen vollumfänglich zu umgeben, wodurch verhindert werden kann, dass von außen auf den Läufer bzw. die Reckstange auftreffende Verschmutzungen durch die Bewegung des Läufers in dem Stator und die Statorbohrung und damit in den Spalt zwischen dem Stator und dem Läufer eingebracht werden können. Derartige Verschmutzungen im Spalt des Motors können zu einer negativen Beeinträchtigung der Motorleistung und damit beispielsweise zu einem Anstieg der Produktionskosten führen.

Des Weiteren wäre es denkbar, dass die Abdeckeinrichtung derart den Bewegungsraum des Läufers und der Reckstange und/oder der Kupplungseinrichtung zwischen dem Stator und der Ventilblockeinrichtung bzw. dem Blasdüsenkolben abdichtet, dass auch innerhalb dieses Bewegungsraumes ein Reinigungsmedium eingebracht werden könnte, wodurch etwaige Verschmutzungen aus dem Stator und insbesondere dem Statorspalt ausgespült werden könnten.

Alternativ oder zusätzlich wäre es auch denkbar, dass die gesamte Behältnisbehandlungseinrichtung innerhalb eines Reinraumes angeordnet ist, welcher zudem entsprechend mit einem Reinigungsmedium oder einem Sterilisationsgas gereinigt bzw. sterilisiert werden könnte, um Verschmutzungen und/oder Kontaminierungen der Einrichtungen und/oder des zu expandierenden Behältnisses zu vermeiden.

In einer weiteren bevorzugten Ausführungsform sind eine Vielzahl der erfindungsgemäßen Behältnisbehandlungseinrichtungen vorzugsweise gleichmäßig zueinander beabstandet an einem gemeinsamen Träger, wie einem Blasrad bzw. einem Transportrad oder einer entsprechenden Transporteinrichtung, welche auch im Wesentlichen einem Transportband entsprechen kann, angeordnet.

Vornehmlich weist der Träger oder auch ein sich dazu in einer parallelen Ebene erstreckender Träger eine vorgegebene Anzahl an Blasstationen auf, welche insbesondere jeweils zwei Blasformteile aufweisen, die geöffnet bzw. geschlossen und vornehmlich miteinander verriegelt werden können. Folglich ist bevorzugt jeder erfindungsgemäßen Behältnisbehandlungseinrichtung genau eine Blasform zugeordnet.

Bevorzugt ist die erfindungsgemäße Behältnisbehandlungseinrichtung zumindest abschnittsweise und/oder zeitweise innerhalb eines Reinraumes angeordnet, welcher derart zu einem Außenraum bzw. einer Umgebung abgegrenzt ist, dass im Wesentlichen sterile Bedingungen in dem Reinraum aufrechterhalten werden können, um eine kontaminierungsfreie Zone zumindest während der Behandlung der Behältnisse zu ermöglichen.

Die erfindungsgemäße Behältnisbehandlungseinrichtung ist vorzugsweise ein Bestandteil einer Behältnisbehandlungsanlage, welche eine Vielzahl von unterschiedlich wirkenden Behältnisbehandlungseinrichtungen zur unterschiedlichsten Behältnisbehandlung, wie Erwärmen, Sterilisieren, Etikettieren, Befüllen, Verschließen usw. aufweisen kann. Diese Behältnisbehandlungsanlage umfasst vorteilhaft unter anderem auch Transporteinrichtungen, wie beispielsweise Transporträder, Trägerelemente, Sternräder oder Vergleichbarem zum Transportieren bzw. Tragen der einzelnen Behältnisbehandlungseinrichtungen sowie Transporteinrichtungen, wie Transporträder und/oder Transportbänder und/oder Transportschienen oder Vergleichbarem zum Halten der zu expandierenden Vorformlinge genauso wie der bereits expandierten Behältnisse in definierten Positionen zum Behandeln dieser Vorformlinge bzw. Behältnisse, und zum gleichzeitigen Transportieren dieser Vorformlinge bzw. Behältnisse von einer Eingabestelle in die Behältnisbehandlungsanlage zu einer ersten Behältnisbehandlungseinrichtung, von dort zu einer weiteren Einrichtung usw., und letzten Endes zu einer Ausgabestelle, um die behandelten Behältnisse aus der Behandlungsanlage wieder entnehmen zu können.

Weitere Vorteile, Ziele und Eigenschaften der vorliegenden Erfindung werden anhand nachfolgender Beschreibung anliegender Zeichnung erläutert, in welcher beispielhaft eine Ausführungsform der erfindungsgemäßen Behältnisbehandlungseinrichtung mit Blaseinrichtung und Reckeinrichtung sowie einer Kupplungseinrichtung dargestellt wird.

Komponenten, welche in den Figuren wenigstens im Wesentlichen hinsichtlich ihrer Funktion übereinstimmen, können hierbei mit gleichen Bezugszeichen gekennzeichnet sein, wobei diese Komponenten nicht in allen Figuren gekennzeichnet und erläutert sein müssen.

In den Figuren zeigen:
- Fig.1: eine Prinzipskizze eines Längsschnittes (in Bewegungsrichtung) durch eine erste Ausführungsform einer erfindungsgemäßen Behältnisbehandlungseinrichtung; und
- Fig.2: eine Prinzipskizze eines Längsschnittes (in Bewegungsrichtung) eines Ausschnittes aus einer Ausführungsform einer erfindungsgemäßen Behältnisbehandlungseinrichtung, welcher eine Ausführungsform einer Kupplungseinrichtung zeigt.

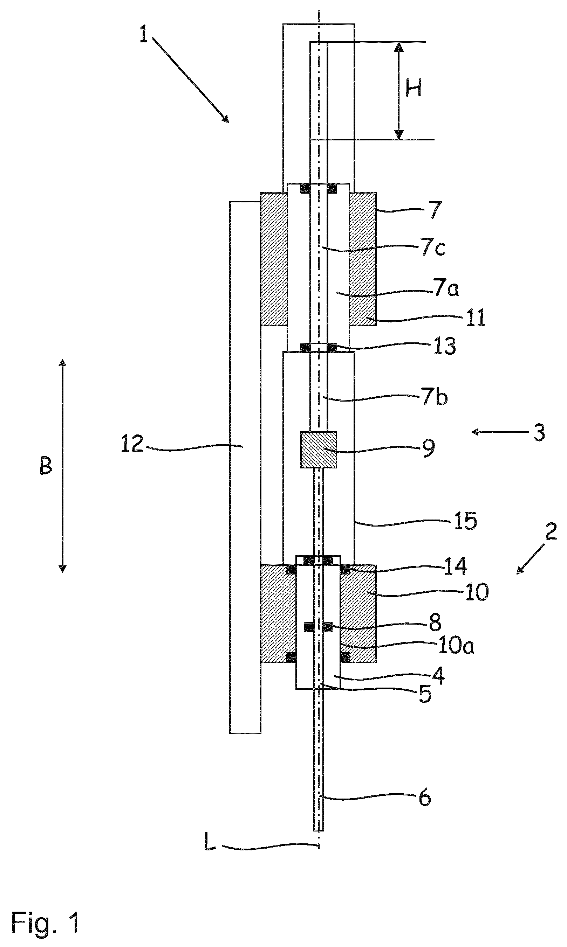

Fig.1 zeigt eine Prinzipskizze eines Längsschnittes (in Bewegungsrichtung B) durch eine erste Ausführungsform einer erfindungsgemäßen Behältnisbehandlungseinrichtung 1, welche eine Blaseinrichtung 2 und eine Reckeinrichtung 3 aufweist. Die Blaseinrichtung 2 weist insbesondere eine Ventilblockeinrichtung 10 und einen Blasdüsenkolben 4 auf, welche zumindest abschnittsweise in dessen Umfangsrichtung, die sich senkrecht zur Bewegungsrichtung B der Reckstange 6 bzw. des Läufers 7b erstreckt, von der Ventilblockeinrichtung 10 umgeben ist. Dieser Blasdüsenkolben ist auf eine Mündung des Behältnisses oder dessen Tragring aufsetzbar, um diesen so mit Blasluft beaufschlagen zu können.

Die Ventilblockeinrichtung 10 ist vorzugsweise starr mit einer Haltevorrichtung 12 und insbesondere in einem unteren Bereich der Haltevorrichtung 12 mit dieser verbunden. Die Haltevorrichtung 12 erstreckt sich zumindest abschnittsweise ebenfalls entlang einer Bewegungsrichtung B.

Die Ventilblockeinrichtung 10 weist eine Ventilblockeinrichtungsbohrung 10a auf, welche sich im Wesentlichen parallel zur Bewegungsrichtung B durch die Ventilblockeinrichtung 10 erstreckt, um den Blasdüsenkolben 4 darin aufnehmen zu können, welcher sich ebenfalls in Bewegungsrichtung B zumindest abschnittsweise durch diese Ventilblockeinrichtungsbohrung 10a hindurch erstreckt und zumindest zeitweise auch hindurch bewegt. Gelagert wird der Blasdüsenkolben 4 innerhalb dieser Ventilblockeinrichtungsbohrung 10a mittels entsprechender Blasdüsenkolbenlagerelemente 14, welche insbesondere als Führungsbuchsen ausgestaltet sein können. Zur Lagerung des Blasdüsenkolben 4 wären jedoch auch Gleitlager oder gar Wälzlager denkbar, so dass die Lagerung des Blasdüsenkolbens 4 nicht auf ein bestimmtes Lagerelement 14 eingeschränkt werden soll.

Dier Blasdüsenkolben 4 weist zudem selbst eine Durchgangsöffnung 5 bzw. eine Durchgangsbohrung 5 auf, die sich entsprechend in Richtung der Bewegungsrichtung B erstreckt.

Die Bewegungsrichtung B ist definiert über die translatorische Bewegung der Reckstange 6 und des Läufers 7b der Reckstangenantriebseinrichtung 7, welche im Folgenden noch genauer beschrieben wird. Demnach entspricht die Bewegungsrichtung B der Bewegungsrichtung insbesondere der Reckstange 6 zu dem zu expandierenden Behältnis hin bzw. von dem expandierten Behältnis weg, so dass nach der Anschauung der Figur 1 die Bewegungsrichtung B im Wesentlichen einer senkrechten bzw. vertikalen Bewegung bzw. Bewegungsrichtung entspricht. Jedoch ändert sich diese Bewegungsrichtung entsprechend der Anordnung des zu behandelnden Behältnisses gegenüber der Behältnisbehandlungsanlage und dementsprechend der Ausrichtung der Behältnisbehandlungsanlage gegenüber dem zu behandelnden Behältnis. In der vorliegenden Figur 1 wird das zu behandelnde Behältnis (hier nicht gezeigt) von unten an die Behältnisbehandlungseinrichtung 1 herangebracht, so dass folglich die Reckstange 6 eine im Wesentlichen vertikal gerichtete translatorische Bewegung von oben nach unten während des Expansionsvorganges und von unten nach oben während des Entspannungsvorganges ausführt. Diese Bewegungsrichtung entspricht dabei bevorzugt auch einer Längsrichtung des zu expandierenden Behältnisses.

Durch die Durchgangsöffnung 5 des Blasdüsenkolbens 4 wird die Reckstange 6 geführt, welche mittels entsprechender Reckstangenlagerungselemente 8 innerhalb der Durchgangsöffnung 5 und erfindungsgemäß ausschließlich über diese Reckstangenlagerungselemente 8 geführt bzw. gelagert wird. Auch die Reckstangenlagerungselemente 8 zur Lagerung der Reckstange 6 können beispielsweise Führungs- bzw. Gleitbuchsen oder entsprechende Gleitelemente oder auch Wälzlager sein.

In der in Figur 1 gezeigten Ausführungsform der Behältnisbehandlungseinrichtung 1 weist die Durchgangsöffnung 5 genau zwei Reckstangenlagerungselemente 8 auf, wobei ein Reckstangenlagerungselement 8 direkt im Eingangsbereich der Durchgangsöffnung 5 angeordnet ist, während das zweite Reckstangenlagerungselement 8 im Wesentlichen mittig, d.h. auf halber Strecke durch die Durchgangsöffnung 5 in der Durchgangsöffnung 5 angeordnet ist, um eine hinreichende Führung bzw. Lagerung und ein möglichst verschleißfreies Gleiten der Reckstange 6 durch die Durchgangsöffnung 5 zu ermöglichen.

Die Reckstange 6 ist mit einer Kupplungseinrichtung 9 verbunden, welche wiederum mit einem Läufer 7b einer Reckstangenantriebseinrichtung 7, welche vornehmlich ein tubularer Linearmotor ist, verbunden ist. Damit ist die Reckstange 6 folglich (mittelbar) über die Kupplungseinrichtung 9 mit dem Läufer 7a wirkverbunden.

Der Läufer 7a bewegt sich während des Expansionsvorganges bzw. während des Entspannungsvorganges durch eine Statorbohrung 7c eines Stators 7a, welcher ebenfalls ein Bestandteil der Reckstangenantriebseinrichtung 7 ist, hindurch. Die Statorbohrung 7c erstreckt sich dabei im Wesentlichen ebenfalls in Richtung der Bewegungsrichtung B.

Vorzugsweise weisen die Statorbohrung 7c bzw. der Stator 7a bzw. der Läufer 7b, die Reckstange 6, die Durchgangsöffnung 5, der Blasdüsenkolben 4 und/oder die Ventilblockeinrichtungsbohrung 10a bzw. die Ventilblockeinrichtung 10 jeweils - zumindest zeitweise - eine gemeinsame zentrale Längsachse L auf, die sich ebenfalls in Richtung der Bewegungsrichtung B erstreckt. D.h., dass die einzelnen zentralen Längsachsen der einzelnen Einrichtungen 7, 7a, 7b, 6, 10, 4 bzw. Bohrungen 7c, 10a, 5 zumindest zeitweise zueinander fluchten. Insbesondere fluchten die Längsachsen der Reckstange 6 und des Stators 7 bzw. insbesondere des Läufers 7b.

Der Läufer 7b ist über entsprechende Läuferlagerelemente 13 innerhalb der Statorbohrung 7c gelagert, vornehmlich derart, dass zwischen der Außenwandung des Läufers 7b und der Wandung der Statorbohrung 7c ein gleichmäßiger Spalt (hier nicht gezeigt) entsteht.

Der Stator 7a selbst in von einer Kühleinrichtung 11 zumindest abschnittsweise umgeben, um bei Betrieb der Reckstangenantriebseinrichtung 7 eine ausreichende Kühlung zu erfahren.

Die Kühleinrichtung 11 ist entsprechend der Ventilblockeinrichtung 10 mit der Haltevorrichtung 12 und vornehmlich einem oberen Bereich der Haltevorrichtung 12 starr verbunden, so dass eine störungsfreie translatorische Bewegung zumindest des Läufers 7a, der Reckstange 6 und auch des Blasdüsenkolbens 4 ermöglicht werden kann.

Des Weiteren ist gemäß der in Figur 1 dargestellten Ausführungsform eine Abdeckung 15 bzw. eine Abdeckeinrichtung 15 gezeigt, welche sich zwischen dem Stator 7a und der Ventilblockeinrichtung 10 erstreckt und vorzugsweise die Reckstange 6, die Kupplungseinrichtung 9 und den Läufer 7b, welche zwischen dem Stator 7a und der Ventilblockeinrichtung 10 zumindest zeitweise beweglich angeordnet sind, vollumfänglich umschließt. Dadurch findet eine Trennung zwischen einem Außenraum A und dem Innenraum I, in welchem sich zumindest Abschnitte der Reckstange 6 und des Läufers 7b sowie die Kupplungseinrichtung 9 befinden, statt. Dadurch können beispielsweise sich im Außenraum A befindliche Verschmutzungen nicht in den Innenraum I gelangen bzw. im Innenraum I befindliche Verschmutzungen nicht in den Außenraum A.

Mit dem Bezugszeichen H ist der Hub der Reckstange 6 dargestellt, d.h. der Weg, den die Reckstange 6 und demzufolge auch der Läufer 7b und ebenfalls die zwischen dem Läufer 7b und der Reckstange angeordnete Kupplungseinrichtung 9 während eines Expansionsvorganges von der Ausgangsposition in eine Bearbeitungsendposition bzw. während des Entspannungsvorganges von der Bearbeitungsendposition in eine Ausgangsposition zurück legen.

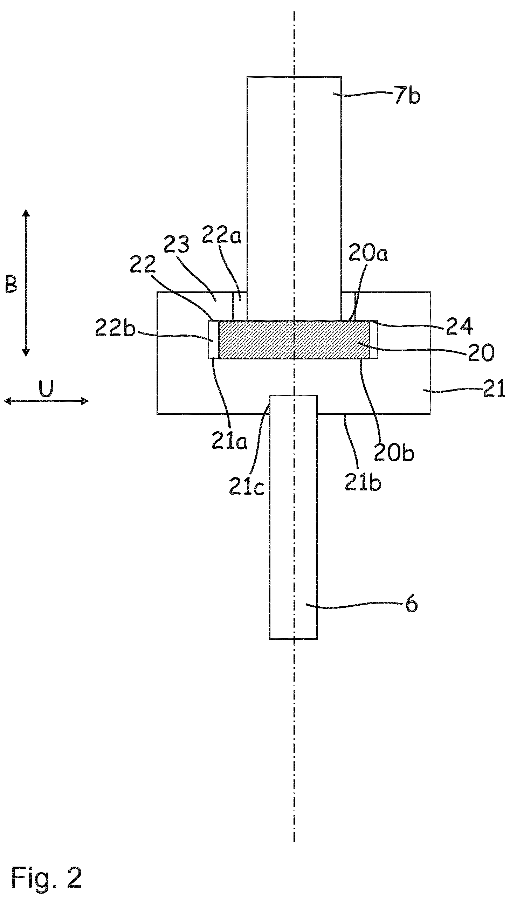

In der Fig.2 ist eine Prinzipskizze eines Längsschnittes durch einen Ausschnitt aus einer Ausführungsform einer erfindungsgemäßen Behältnisbehandlungseinrichtung 1, und insbesondere einer (ersten) Ausführungsform einer Kupplungseinrichtung 9 gezeigt.

Die Kupplungseinrichtung 9 weist ein Läuferkupplungselement 20, an welchem der Läufer 7b der Reckstangenantriebseinrichtung 7 (vgl. Figur 1) angeordnet ist und ein Reckstangenkupplungselement 21, an welchem die Reckstange 6 der Reckeinrichtung 3 (vgl. Figur 1) angeordnet ist, auf.

Das Reckstangenkupplungselement 21 weist eine Ausnehmung 22 auf, welche sich aus einem ersten Bereich 22a und einem zweiten Bereich 22b zusammensetzt, wobei der erste Bereich 22a der Ausnehmung 22 deutlich kleiner dimensioniert ist - insbesondere in sich senkrecht zur Bewegungsrichtung B erstreckenden Umfangsrichtung U -, als der zweite Bereich 22b der Ausnehmung 22. In der in Figur 2 aufgezeigten Schnittdarstellung wird deutlich, dass die Ausnehmung im Längsschnitt betrachtet eine T-förmige Gestalt aufweist. Das Läuferkupplungselement 20 kann dabei beispielsweise einen kreisförmigen Querschnitt aufweisen, ebenso wie die Ausnehmung 22. Es könnten jedoch auch andere Querschnitte vorgesehen sein, insbesondere um den Läufer und die Reckstange aneinander zu montieren und demontieren zu können. So wäre es denkbar, dass an dem Läuferkupplungselement randseitig Nuten angeordnet sind, und in der Ausnehmung 22 Nuten, wobei nur in einer bestimmten Drehstellung des Läuferkupplungselements gegenüber der Ausnehmung eine Montage oder Demontage möglich ist.

Das Läuferkupplungselement 20 ist vornehmlich lediglich innerhalb des zweiten Bereichs 22b der Ausnehmung 22 angeordnet, so dass sich zumindest ein Bereich des Läufers 7a zumindest abschnittsweise durch den ersten Bereich 22a der Ausnehmung erstreckt.

Der zweite Bereich 22b der Ausnehmung 22 ist insbesondere in Umfangsrichtung U bzw. in sich senkrecht zur Bewegungsrichtung B erstreckender Richtung größer dimensioniert, als das sich ebenfalls in Umfangsrichtung U erstreckende Läuferkupplungselement 20. Vergleichbares gilt für den ersten Bereich 22a der Ausnehmung 22, welcher ebenfalls in Umfangsrichtung U betrachtet größer dimensioniert ist, als der innerhalb dem ersten Bereich 22a der Ausnehmung 22 verlaufende Abschnitt des Läufers 7b und insbesondere dessen Durchmesser.

Folglich wird vorteilhaft ein Spiel, d.h. eine Bewegung in Umfangsrichtung U zwischen dem Läuferkupplungselement 20 und dem Reckstangenkupplungselement 21 gestattet, insbesondere, um eine prozesssichere translatorische Bewegung des Läufers 7b und demzufolge auch der Reckstange 6 unabhängig auftretender Querkräfte zu ermöglichen.

Des Weiteren weist das Läuferkupplungselement 20 eine erste Läuferkupplungselementkraftaufnahmeseite 20a und eine erste Läuferkupplungselementkraftabgabeseite 20b auf, wobei dementsprechend auch das Reckstangenkupplungselement 21 eine erste Reckstangenkupplungselementkraftaufnahmeseite 21 a und eine erste Reckstangenkupplungselementkraftabgabeseite 21 b aufweist.

Während des Expansionsvorganges wird eine durch den Läufer 7b auf das Läuferkupplungselement 20 aufgebrachte Druckkraft von der ersten Läuferkupplungselementkraftaufnahmeseite 20a aufgenommen und über die erste Läuferkupplungselementkraftabgabeseite 20b der ersten Reckstangenkupplungselementkraftaufnahmeseite 21 a und von dort zu der ersten Reckstangenkupplungselementkraftabgabeseite 21 b übertragen, von wo aus die Druckkraft weiter auf die Reckstange 6 geleitet wird, so dass diese sich entsprechend der Bewegung des Läufers 7b ebenfalls translatorisch in Bewegungsrichtung B und insbesondere in Richtung des zu behandelnden Behältnisses bewegt.

Im Fall eines dem Expansionsvorganges nachfolgenden Entspannungsvorganges, wenn also der Vorformling (hier nicht gezeigt) expandiert wurde und die Reckstange 6 wieder aus dem expandierten Behältnis heraus bewegt werden soll, übt der Läufer 7b - aufgrund seiner nun entgegengesetzt gerichteten Bewegung (nämlich in Bewegungsrichtung B nach oben) - eine Zugkraft auf das Läuferkupplungselement 20 und damit das Reckstangenkupplungselement 21 und damit auch auf die Reckstange 6 aus, um auch die Reckstange 6 zu einer Bewegung in Bewegungsrichtung B nach oben zu bewegen.

Demnach wird die Zugkraft vom Läufer 7b über die erste Läuferkupplungselementkraftaufnahmeseite 20a an die erste Läuferkupplungselementkraftabgabeseite 20b und von dort aus an die erste Reckstangenkupplungselementkraftaufnahmeseite 21 a bis hin zur der ersten Reckstangenkupplungselementkraftabgabeseite 21 b übertragen, von wo aus die Zugkraft weiter auf die Reckstange 6 geleitet wird. Dies ist insbesondere in dem Fall möglich, wenn vornehmlich zwischen der ersten Läuferkupplungselementkraftabgabeseite 20b und der ersten Reckstangenkupplungselementkraftaufnahmeseite 21 a eine vorzugsweise formschlüssige Verbindung stattfindet, ohne dass zusätzliche Halteelemente benötigt werden.

Liegen die beiden Seiten 20b und 21 a jedoch nur aufeinander, ohne durch entsprechende Hilfselemente ineinander eingreifen zu können, ändern sich die Kraftlinienverläufe, insbesondere während des Entspannungsvorganges und demnach während der Bewegung der Reckstange 6 bzw. des Läufers 7a zurück in deren Ausgangspositionen.

Wie in der Figur 2 gezeigt, dient die Ausgestaltung der Ausnehmung 22 des Reckstangenkupplungselementes 21 vorzugsweise dazu zumindest sich abschnittsweise über die erste Läuferkupplungselementkraftaufnahmeseite 20a erstreckende Halteelemente 23 ausformen zu können, welche im Falle des Aufbringens der oben genannten Zugkraft ihrerseits zumindest eine zweite Reckstangenkupplungselementkraftaufnahmeseite 24 aufweisen bzw. ausbilden, auf welche die Zugkraft aufgebracht wird.

Bevorzugt weist das Läuferkupplungselement 20 kein Bewegungsspiel in Bewegungsrichtung B innerhalb der Ausnehmung 22 und insbesondere innerhalb dem zweiten Bereich 22b der Ausnehmung 22 auf.

Des Weiteren wird in der Figur 2 deutlich, dass das Reckstangenkupplungselement 21 insbesondere im Bereich der ersten Reckstangenkupplungselementkraftabgabeseite 21 b eine Reckstangenkupplungselementbohrung 21 c aufweist, in welcher die Reckstange 6 und insbesondere ein Endabschnitt der Reckstange 6 eingebracht ist, um sich mit dem Reckstangenkupplungselement 21 zu verbinden. Dazu ist es denkbar, dass diese Verbindung formschlüssig, durch beispielsweise ein Ineinandergreifen von entsprechenden Gewinden oder in Form eines Bajonettverschlusses oder unter Zuhilfenahme von entsprechenden Verbindungsmedien, wie Klebstoffen etc., oder auch kraftschlüssig, durch beispielsweise eine Presspassung realisiert wird.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Behältnisbehandlungseinrichtung
- 2: Blaseinrichtung
- 3: Reckeinrichtung
- 4: Blasdüsenkolben
- 5: Durchgangsöffnung
- 6: Reckstange
- 7: Reckstangenantriebseinrichtung
- 7a: Stator
- 7b: Läufer
- 7c: Statorbohrung
- 8: Reckstangenlagerelement
- 9: Kupplungseinrichtung
- 10: Ventilblockeinrichtung
- 10a: Ventilblockeinrichtungsbohrung
- 11: Kühleinrichtung
- 12: Haltevorrichtung
- 13: Läuferlagerelement
- 14: Blasdüsenkolbenlagerelement
- 15: Abdeckung
- 20: Läuferkupplungselement
- 20a: erste Läuferkupplungselementkraftaufnahmeseite
- 20b: erste Läuferkupplungselementkraftabgabeseite
- 21: Reckstangenkupplungselement
- 21a: erste Reckstangenkupplungselementkraftaufnahmeseite
- 21b: erste Reckstangenkupplungselementkraftabgabeseite
- 21c: Reckstangenkupplungselementbohrung
- 22: Ausnehmung
- 22a: erster Bereich
- 22b: zweiter Bereich
- 23: Haltevorsprung
- 24: zweite Reckstangenkupplungselementkraftaufnahmeseite
- B: Bewegungsrichtung
- H: Hub
- L: zentrale Längsachse
- U: Umfangsrichtung

## Patentansprüche

1. Behältnisbehandlungseinrichtung (1) zum Expandieren von Vorformlingen zu Behältnissen, aufweisend zumindest eine Blaseinrichtung (2) zum Einbringen eines unter Druck befindlichen fließfähigen Mediums in einen Innenraum des Vorformlings, und zumindest eine Reckeinrichtung (3) zum Strecken des Vorformlings während eines Expansionsvorganges,
**dadurch gekennzeichnet, dass**
die Blaseinrichtung (2) zumindest einen Blasdüsenkolben (4) und die Reckeinrichtung (3) zumindest eine sich zumindest abschnittsweise und zumindest zeitweise translatorisch durch eine Durchgangsöffnung (5) des Blasdüsenkolbens (4) bewegbare Reckstange (6) aufweist, welche in Wirkverbindung mit zumindest einem Abschnitt einer Reckstangenantriebseinrichtung (7) steht, wobei zumindest ein Reckstangenlagerelement (8) im Bereich der Durchgangsöffnung (5) angeordnet ist, um die Reckstange (6) zu führen und wobei eine Kupplungseinrichtung (9) zwischen der Reckstange (6) und der Reckstangenantriebseinrichtung (7) angeordnet ist.

2. Vorrichtung nach Anspruch 1 ,
**dadurch gekennzeichnet, dass**
die Reckstangenantriebseinrichtung (7) ein elektrisch antreibbarer tubularer Linearmotor ist.

3. Vorrichtung nach Anspruch 2,
**dadurch gekennzeichnet, dass**
die Kupplungseinrichtung (9) zumindest ein Läuferkupplungselement (20) und ein Reckstangenkupplungselement (21) aufweist, wobei das Läuferkupplungselement (20) zumindest eine erste Läuferkupplungselementkraftaufnahmeseite (20a) und zumindest eine erste Läuferkupplungselementkraftabgabeseite (20b) und das Reckstangenkupplungselement (21) zumindest eine erste Reckstangenkupplungselementkraftaufnahmeseite (21 a) und zumindest eine erste Reckstangenkupplungselementkraftabgabeseite (21 b) aufweist.

4. Vorrichtung nach Anspruch 3 ,
**dadurch gekennzeichnet, dass**
ein Läufer (7b) an der ersten Läuferkupplungselementkraftaufnahmeseite (20a) und die Reckstange (6) an der ersten Reckstangenkupplungselementkraftabgabeseite (21 b) angeordnet sind.

5. Vorrichtung nach einem der Ansprüche 3 oder 4,
**dadurch gekennzeichnet, dass**
das Läuferkupplungselement(20) zumindest abschnittsweise in einer Ausnehmung (22) des Reckstangenkupplungselementes (21) angeordnet ist, wobei die Ausnehmung (22) zumindest bereichsweise zumindest in sich senkrecht zur Bewegungsrichtung (B) der Reckstange (6) erstreckender Umfangsrichtung (U) größer gestaltet ist, als ein sich in senkrecht zur Bewegungsrichtung (B) der Reckstange (6) erstreckender Umfang des Läuferkupplungselements (20), um zumindest eine begrenzte Bewegung des Läuferkupplungselements (20) in der sich senkrecht zur Bewegungsrichtung (B) der Reckstange (6) erstreckenden Richtung zu ermöglichen.

6. Vorrichtung nach einem der Ansprüche 3 oder 4,
**dadurch gekennzeichnet, dass**
das Reckstangenkupplungselement (21) zumindest abschnittsweise in einer Ausnehmung (22) des Läuferkupplungselementes (20) angeordnet ist, wobei die Ausnehmung (22) zumindest bereichsweise zumindest in sich senkrecht zur Bewegungsrichtung (B) der Reckstange (6) erstreckender Umfangsrichtung (U) größer gestaltet ist, als ein sich in senkrecht zur Bewegungsrichtung (B) der Reckstange (6) erstreckender Umfang des Reckstangenkupplungselementes (21), um zumindest eine begrenzte Bewegung des Reckstangenkupplungselementes (21) in der sich senkrecht zur Bewegungsrichtung (B) der Reckstange (6) erstreckenden Richtung zu ermöglichen.

7. Vorrichtung nach einem der Ansprüche 3 bis 6,
**dadurch gekennzeichnet, dass**
zumindest ein Bereich der ersten Läuferkupplungselementkraftabgabeseite (20b) zumindest abschnittsweise einen Bereich der ersten Reckstangenkupplungselementkraftaufnahmeseite (21 a) kontaktiert, um zumindest während des Expansionsvorganges formschlüssig und/oder kraftschlüssig die vom Läufer (7b) auf das Kupplungselement (9) aufgebrachte Kraft auf die Reckstange (6) zu übertragen.

8. Vorrichtung nach einem der vorangegangenen Ansprüche,
**dadurch gekennzeichnet, dass**
der Läufer (7b) eine zentrale sich zumindest abschnittsweise in Bewegungsrichtung (B) der Reckstange (6) erstreckende Längsachse (L) aufweist, welche zumindest abschnittsweise mit einer zentralen sich zumindest abschnittsweise in Bewegungsrichtung (B) der Reckstange (6) erstreckenden Längsachse (L) der Reckstange (6) fluchtet.

9. Vorrichtung nach einem der vorangegangenen Ansprüche,
**dadurch gekennzeichnet, dass**
die Behältnisbehandlungseinrichtung (1) eine sich zumindest abschnittsweise in Richtung der Bewegungsrichtung (B) der Reckstange (6) erstreckende Haltevorrichtung (12) aufweist, an welcher eine den Blasdüsenkolben (4) führende und zumindest abschnittsweise umgebende Ventilblockeinrichtung (10) und/oder eine die Reckstangenantriebseinrichtung (7) zumindest teilweise umgebende Kühleinrichtung (11) stationär angeordnet sind.

## Claims

1. A container treatment device (1) for the expansion of pre-forms into containers, having at least one blow moulding device (2) for the introduction of a flowable medium under pressure into an inner space of the pre-form, and at least one stretching device (3) for stretching the pre-form during an expansion procedure, **characterized in that** the blow moulding device (2) has at least one blow moulding nozzle piston (4) and the stretching device (3) has at least one stretch rod (6) which is movable at least in sections and at least for a time through a through opening (5) of the blow moulding nozzle piston (4) in a translational manner and which is operatively connected to at least one portion of a stretch rod drive device (7), wherein at least one stretch rod bearing element (8) is arranged in the region of the through opening (5) in order to guide the stretch rod (6), and wherein a coupling device (9) is arranged between the stretch rod (6) and the stretch rod drive device (7).

2. An apparatus according to claim 1, **characterized in that** the stretch rod drive device (7) is a tubular linear motor capable of being driven electrically.

3. An apparatus according to claim 2, **characterized in that** the coupling device (9) has at least one rotor coupling element (20) and one stretch rod coupling element (21), wherein the rotor coupling element (20) has at least one first force absorption side (20a) and at least one first force delivery side (20b) and the stretch rod coupling element (21) has at least one first force absorption side (21a) and at least one first force delivery side (21 b).

4. An apparatus according to claim 3, **characterized in that** the rotor (7b) is arranged on the first rotor coupling element force absorption side (20a) and the stretch rod (6) is arranged on the first stretch rod coupling element force delivery side (21 b).

5. An apparatus according to one of claims 3 or 4, **characterized in that** the rotor coupling element (20) is arranged at least in sections in a recess (22) in the stretch rod coupling element (21), wherein the recess (22) is made larger at least locally at least in a peripheral direction (U) which extends at a right angle to the direction of movement (B) of the stretch rod (6) than a periphery of the rotor coupling element (20) which extends at a right angle to the direction of movement (B) of the stretch rod (6), in order to allow at least a limited movement of the rotor coupling element (20) in the direction which extends at a right angle to the direction of movement (B) of the stretch rod (6).

6. An apparatus according to one of claims 3 or 4, **characterized in that** the stretch rod coupling element (21) is arranged at least in sections in a recess (22) in the rotor coupling element (20), wherein the recess (22) is made larger at least locally at least in a peripheral direction (U) which extends at a right angle to the direction of movement (B) of the stretch rod (6) than a periphery of the stretch rod coupling element (21) which extends at a right angle to the direction of movement (B) of the stretch rod (6), in order to allow at least a limited movement of the stretch rod coupling element (21) in the direction which extends at a right angle to the direction of movement (B) of the stretch rod (6).

7. An apparatus according to any one of claims 3 to 6, **characterized in that** at least one region of the first rotor coupling element force delivery side (20b) contacts at least in sections a region of the first stretch rod coupling element force absorption side (21 a), in order to transmit the force exerted by the rotor (7b) upon the coupling element (9) to the stretch rod (6) at least during the expansion procedure in a positively locking and/or non-positively locking manner.

8. An apparatus according to any one of the preceding claims, **characterized in that** the rotor (7b) has a central longitudinal axis (L) which extends at least in sections in the direction of movement (B) of the stretch rod (6) and which is in alignment at least in sections with a central longitudinal axis (L) of the stretch rod (6) extending at least in sections in the direction of movement (B) of the stretch rod (6).

9. An apparatus according to any one of the preceding claims, **characterized in that** the container treatment device (1) has a holding apparatus (12) which extends at least in sections in the direction of the direction of movement (B) of the stretch rod (6) and on which a valve block device (10) guiding and surrounding at least in sections the blow moulding nozzle piston (4) and/or a cooling device (11) surrounding at least in part the stretch rod drive device (7) is or are arranged in a stationary manner.

## Revendications

1. Dispositif de traitement de récipient (1) servant à dilater des préformes pour obtenir des récipients, présentant au moins un dispositif de soufflage (2) servant à introduire un milieu pouvant s'écouler sous pression dans un espace intérieur de la préforme, et présentant au moins un dispositif d'étirage (3) servant à étirer la préforme au cours d'une opération de dilatation,
**caractérisé en ce**
**que** le dispositif de soufflage (2) présente au moins un piston de buse de soufflage (4) et le dispositif d'étirage (3) présente au moins une tige d'étirage (6) pouvant être déplacée au moins par sections et au moins par intermittence par translation à travers une ouverture de passage (5) du piston de buse de soufflage (4), laquelle tige d'étirage se trouve en liaison active avec au moins une section d'un dispositif d'entraînement de tige d'étirage (7), sachant qu'au moins un élément de palier de tige d'étirage (8) est disposé dans la zone de l'ouverture de passage (5) afin de guider la tige d'étirage (6) et sachant qu'un dispositif de couplage (9) est disposé entre la tige d'étirage (6) et le dispositif d'entraînement de tige d'étirage (7).

2. Dispositif selon la revendication 1,
**caractérisé en ce**
**que** le dispositif d'entraînement de tige d'étirage (7) est un moteur linéaire tubulaire à entraînement électrique.

3. Dispositif selon la revendication 2,
**caractérisé en ce**
**que** le dispositif de couplage (9) présente au moins un élément de couplage de rotor (20) et un élément de couplage de tige d'étirage (21), sachant que l'élément de couplage de rotor (20) présente au moins un premier côté d'absorption de force d'élément de couplage de rotor (20a) et au moins un premier côté de transmission de force d'élément de couplage de rotor (20b) et que l'élément de couplage de tige d'étirage (21) présente au moins un premier côté d'absorption de force d'élément de couplage de tige d'étirage (21a) et au moins un premier côté de transmission de force d'élément de couplage de tige d'étirage (21 b).

4. Dispositif selon la revendication 3,
**caractérisé en ce**
**qu'**un rotor (7b) est disposé au niveau du premier côté d'absorption de force d'élément de couplage de rotor (20a) et la tige d'étirage (6) est disposée au niveau du premier côté de transmission de force d'élément de couplage de tige d'étirage (21 b).

5. Dispositif selon l'une quelconque des revendications 3 ou 4,
**caractérisé en ce**
**que** l'élément de couplage de rotor (20) est disposé au moins par sections dans un évidement (22) de l'élément de couplage de tige d'étirage (21), sachant que l'évidement (22) est configuré, au moins par endroits au moins dans une direction périphérique (U) s'étendant de manière perpendiculaire par rapport à la direction de déplacement (B) de la tige d'étirage (6), plus grand qu'une périphérie, s'étendant de manière perpendiculaire par rapport à la direction de déplacement (B) de la tige d'étirage (6), de l'élément de couplage de rotor (20) afin de permettre au moins un déplacement limité de l'élément de couplage de rotor (20) dans la direction s'étendant de manière perpendiculaire par rapport à la direction de déplacement (B) de la tige d'étirage (6).

6. Dispositif selon l'une quelconque des revendications 3 ou 4,
**caractérisé en ce**
**que** l'élément de couplage de tige d'étirage (21) est disposé au moins par sections dans un évidement (22) de l'élément de couplage de rotor (20), sachant que l'évidement (22) est, au moins par endroits au moins dans une direction périphérique (U) s'étendant de manière perpendiculaire par rapport à la direction de déplacement (B) de la tige d'étirage (6), plus grand qu'une périphérie, s'étendant de manière perpendiculaire par rapport à la direction de déplacement (B) de la tige d'étirage (6), de l'élément de couplage de tige d'étirage (21) afin de permettre au moins un déplacement limité de l'élément de couplage de tige d'étirage (21) dans la direction s'étendant de manière perpendiculaire par rapport à la direction de déplacement (B) de la tige d'étirage (6).

7. Dispositif selon l'une quelconque des revendications 3 à 6,
**caractérisé en ce**
**qu'**au moins une zone du premier côté de transmission de force de l'élément de couplage de rotor (20b) est mise en contact au moins par sections avec une zone du premier côté d'absorption de force de l'élément de couplage de tige d'étirage (21 a) afin de transmettre, au moins au cours de l'opération de dilatation, par complémentarité de forme et/ou à force, la force appliquée par le rotor (7b) sur l'élément de couplage (9) sur la tige d'étirage (6).

8. Dispositif selon l'une quelconque des revendications précédentes,
**caractérisé en ce**
**que** le rotor (7b) présente un axe longitudinal (L) central s'étendant au moins par sections dans la direction de déplacement (B) de la tige d'étirage (6), lequel est aligné au moins par sections avec un axe longitudinal (L) central, s'étendant au moins par sections dans la direction de déplacement (B) de la tige d'étirage (6), de la tige d'étirage (6).

9. Dispositif selon l'une quelconque des revendications précédentes,
**caractérisé en ce**
**que** le dispositif de traitement de récipient (1) présente un système de maintien (12) s'étendant au moins par sections dans la direction de la direction de déplacement (B) de la tige d'étirage (6), au niveau duquel sont disposés de manière stationnaire un dispositif de bloc de soupape (10) guidant et entourant au moins par sections le piston de buse de soufflage (4) et/ou un dispositif de refroidissement (11) entourant au moins en partie le dispositif d'entraînement de tige d'étirage (7).
